# EUROPÄISCHE PATENTSCHRIFT

(11) **EP 3 604 907 B1**
(45) Veröffentlichungstag und Bekanntmachung des Hinweises auf die Patenterteilung: **01.09.2021**
(21) Anmeldenummer: 19188840.3
(22) Anmeldetag: 29.07.2019
(51) Int. Cl.: F21S 45/10, F21S 45/60, F21S 45/00, B60J 1/20, A42B 3/24, F21S 41/62, B60Q 1/00

(54) **BELEUCHTUNGSVORRICHTUNG FÜR EIN KRAFTFAHRZEUG, KRAFTFAHRZEUG UND VERFAHREN ZUM ENTFERNEN VON VEREISUNGEN VON EINER BELEUCHTUNGSVORRICHTUNG**
LIGHTING DEVICE FOR A MOTOR VEHICLE, MOTOR VEHICLE AND METHOD FOR REMOVING ICE FROM A LIGHTING DEVICE
DISPOSITIF D'ÉCLAIRAGE POUR UN VÉHICULE AUTOMOBILE, VÉHICULE AUTOMOBILE ET PROCÉDÉ D'ÉLIMINATION DU GIVRAGE D'UN DISPOSITIF D'ÉCLAIRAGE

(30) Priorität: 02.08.2018 DE 102018118781
(43) Veröffentlichungstag der Anmeldung: 05.02.2020
(73) Patentinhaber: MAN Truck & Bus SE, 80995 München (DE)
(72) Erfinder: Hackl, Andreas, 81829 München (DE); Zellner, Christoph, 80339 München (DE)
(74) Vertreter: v. Bezold & Partner Patentanwälte - PartG mbB

(56) Entgegenhaltungen:
- WO-A1-99/42324
- DE-A1- 2 208 998
- DE-U1- 9 410 684
- DE-U1-202006 014 552
- GB-A- 1 462 044
- US-A- 5 592 698
- US-A- 5 872 656
- US-A1- 2015 359 675

## Beschreibung

Die Erfindung betrifft eine Beleuchtungsvorrichtung, vorzugsweise einen LED-Scheinwerfer, für ein Kraftfahrzeug. Ferner betrifft die Erfindung ein Kraftfahrzeug mit einer entsprechenden Beleuchtungsvorrichtung sowie ein Verfahren zum Entfernen von Vereisungen von einer Beleuchtungseinrichtung.

Beleuchtungsvorrichtungen von Kraftfahrzeugen, wie beispielsweise Frontscheinwerfer und Heckscheinwerfer, benötigen in der Regel keine speziellen Enteisungsvorrichtungen, sofern herkömmliche Halogenlampen oder Gasentladungslampen verwendet werden, da diese üblicherweise genügend viel Wärme produzieren, um Eis und/oder Schnee abzutauen.

Scheinwerfer mit kalten Leuchtmitteln, wie beispielsweise Scheinwerfer mit Licht emittierenden Dioden (LED, light emitting diode) oder auch Scheinwerfer mit Xenonlampen erzeugen hingegen keine ausreichende Wärmemenge und zeigen daher oftmals eine zu geringe Abtauleistung. Die daraus resultierende Eisbildung oder Reifbildung auf derartigen Scheinwerfern ist hierbei nicht nur aus ästhetischen Gründen störend, auch aus Sicherheitsgründen sollte der Lichtstrahl beim Austritt aus einem Scheinwerfer nicht gedämpft oder gestreut werden.

Das Dokument DE 94 10 684 U1 offenbart einen Steinschlagschutz für Kraftfahrzeuge und bezieht sich im näheren auf den Splitter- und Kratzschutz der Glas- und zerbrechlichen Kunststoffteile, insbesondere der Beleuchtungseinrichtungen, von Kraftfahrzeugen. Insbesondere wird die Steinschlagschutzfolie aus einer Grundfolie und einer Deckfolie mit dazwischen geordnetem Verstärkungsgerüst 3 gezeigt.

Das Dokument WO 94/42324 offenbart eine Vorrichtung, die vor einer Scheinwerferlinse eines Fahrzeugs angebracht werden kann, wobei die Vorrichtung einen Film aus einem transparenten Material umfasst. Der Film ist so angeordnet, dass er vor der Linse eine wärmeisolierende Schicht bildet, um sie vor schnellen Temperaturschwankungen zu schützen, die sonst zu einer Rissbildung der Linse führen könnten.

Um mögliche Schäden an der Beleuchtungsvorrichtung durch ein mechanisches oder chemisches Entfernen von Vereisungen mittels Eiskratzer oder Enteisungsmitteln zu vermeiden sind im Stand der Technik Fahrzeugscheinwerfer bekannt, in deren Gehäuse und/oder Lichtscheiben Heizeinrichtungen angeordnet sind. Beispielsweise offenbart die JP2003197013 den Einbau von Heizdrähten in die Lichtscheibe. Derartige Heizdrähte sind allerdings deutlich sichtbar und daher aus ästhetischen Gründen nicht akzeptabel. Auch ins Gehäuse integrierte Heizeinrichtungen verbrauchen Bauraum und müssen darüber hinaus mit Strom versorgt werden, was den Aufwand für den Einbau sowie die Fehleranfälligkeit der Scheinwerfer erhöht.

Es ist daher Aufgabe der Erfindung eine Beleuchtungsvorrichtung für ein Kraftfahrzeug sowie ein Verfahren bereitzustellen, um auf einfache und schnelle Weise ein Entfernen von Vereisungen von der Beleuchtungseinrichtung zu ermöglichen. Insbesondere ist es dabei eine Aufgabe der Erfindung eine kostengünstige und bauraumsparende Möglichkeit zur Enteisung von einer Beleuchtungseinrichtung bereitzustellen.

Diese Aufgaben werden erfindungsgemäß durch eine Beleuchtungsvorrichtung, ein Kraftfahrzeug sowie ein Verfahren mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße Beleuchtungsvorrichtung für ein Kraftfahrzeug, vorzugsweise ein LED-Scheinwerfer, umfasst - in an sich bekannter Weise - ein eine Lichtquelle umgebendes Gehäuse mit einer für den Lichtaustritt vorgesehene Lichtscheibe. Die Lichtscheibe kann dabei aus Kunststoff und/oder Glas gefertigt sein und eine Lichtaustrittsöffnung des Gehäuses abdecken.

Um auf vorteilhafte Weise ein einfaches und schnelles Entfernen von Vereisungen von einer Beleuchtungseinrichtung zu ermöglichen, ist erfindungsgemäß auf einer der Lichtquelle abgewandten Außenseite der Lichtscheibe eine lichtdurchlässige Abreißfolie lösbar befestigt. Der Ausdruck "*Abreißfolie*" kann dabei jede Art von lösbar befestigbaren Folien, vorzugsweise Kunststofffolien, bezeichnen. Beispielsweise kann die lichtdurchlässige Abreißfolie zur lösbaren Befestigung auf ihrer der Lichtscheibe zugewandten Seite eine Haftkleberschicht umfassen, deren Klebkraft so abgestimmt ist, dass sich die auf der Lichtscheibe befestige Abreißfolie gut und vorzugsweise nahezu rückstandsfrei von der Außenseite der Lichtscheibe lösen lässt. Alternativ kann zum lösbaren Befestigen der lichtdurchlässigen Abreißfolie auch eine entsprechende Klemm- und/oder Haltevorrichtung an der Beleuchtungseinrichtung angebracht sein. Durch Abziehen bzw. Ablösen der Abreißfolie von der Lichtscheibe, vorzugsweise kurz vor Fahrtbeginn, können somit auf vorteilhafte Weise Schnee, Reif und/oder Vereisungen, welche sich möglicherweise an der Beleuchtungseinrichtung - genauer gesagt an der Außenseite der Abreißfolie - angelagert haben schnell entfernt werden. Darüber hinaus, kann das Abziehen bzw. Ablösen der Abreißfolie auf vorteilhafte Weise ferner auch zum Entfernen von Verschmutzungen von der Beleuchtungseinrichtung verwendet werden, ohne den Bereich der Erfindung zu verlassen.

Gemäß der Erfindung umfasst die Abreißfolie eine Mehrzahl stapelförmig aufeinanderliegender Folienlagen. Mit anderen Worten ist die Abreißfolie damit als Folienstapel aus einzeln ablösbaren Folienlagen ausgebildet sein. Hierbei können die einzelnen Folienlagen jeweils auf einer der Lichtscheibe zugewandten Seite eine Haftkleberschicht umfassen, deren Klebkraft so abgestimmt ist, dass sich die einzelnen Folienlagen gut voneinander ablösen lassen. Zudem oder alternativ kann die Mehrzahl an Folienlagen auch mittels einer entsprechenden Klemm- und/oder Haltevorrichtung an der Beleuchtungseinrichtung befestigt sein. Indem bei einem Ablösevorgang jeweils nur die oberste, d. h. die am weitesten von der Lichtscheibe entfernte, Folienlage der Mehrzahl an Folienlagen abgelöst wird, kann auf vorteilhafte Weise die Abreißfolie für mehrere Enteisungsvorgängen verwendet werden.

Um auf vorteilhafte Weise das Ablösen der einzelnen Lagen zu erleichtern, umfasst - nach einer Weiterbildung dieses Aspekts - jede der Folienlagen eine Grifflasche zum Ablösen der jeweiligen Folienlage der Abreißfolie. Dabei kann jede der Grifflaschen jeweils integral an die entsprechende Abreißfolie angeformt sein und/oder aus demselben lichtdurchlässigen Material bestehen. Alternativ kann es sich bei den jeweiligen Grifflaschen auch jeweils um ein separates Element handeln, das an der jeweiligen Abreißfolie befestigt ist. Um dabei die Griffigkeit der Grifflaschen zu erhöhen, können die Grifflaschen ferner jeweils eine Fingereingriffsöffnung und/oder ein Noppen bildendes Pünktchenraster aufweisen.

Gemäß eines weiteren Aspekts der Erfindung kann die Lichtquelle Leuchtdioden und/oder Laserdioden als Leuchtmittel umfassen. Vorzugsweise handelt es sich bei der Beleuchtungsvorrichtung somit um einen LED-Scheinwerfer, beispielsweise einen LED-Frontscheinwerfer und/oder LED-Heckscheinwerfer. Alternativ kann die Lichtquelle allerdings auch eine Xenonlampe, Glühlampe, Halogenlampe und/oder Gasentladungslampe als Lichtquelle umfassen. Der Vorteil bei der Verwendung der Abreißfolie bei Scheinwerfer mit kalten Leuchtmitteln liegt darin, dass diese im Betrieb normalerweise keine ausreichende Wärmemenge produzieren und deshalb zum Vereisen neigen. Gerade für diese Beleuchtungseinrichtungen ermöglicht die Erfindung somit, eine kostengünstige und bauraumsparende Möglichkeit zur Enteisung bereitzustellen.

Nach einem weiteren Aspekt der Erfindung kann eine zur Lichtscheibe gerichtete Seite der Abreißfolie vollflächig an der Außenseite der Lichtscheibe anliegen und dabei vorzugsweise mindestens 75 %, besonders bevorzugt 95%, der Außenseite der Lichtscheibe bedecken. Anders ausgedrückt, kann die gesamte zur Lichtscheibe gerichtete Seite der Abreißfolie in direktem Kontakt mit der Lichtscheibe stehen, wobei vorzugsweise die zur Lichtscheibe gerichtete Seite der Abreißfolie mittels einer Haftklebeschicht an der Lichtscheibe befestigt sein kann. Dadurch, dass die Abreißfolie dabei die komplette bzw. einen Großteil der Außenfläche der Lichtscheibe bedeckt, wird auf vorteilhafte Weise sichergestellt, dass die Lichtscheibe möglichst großflächig von Eis befreit werden kann und damit die Betriebs- bzw. Verkehrssicherheit des Kraftfahrzeugs gewährleistet wird.

Um überdies die Betriebs- bzw. Verkehrssicherheit des Kraftfahrzeugs sicherzustellen, kann gemäß einem weiteren Aspekt eine aus der Beleuchtungsvorrichtung austretende Lichtstärke und/oder eine von der Abreißfolie abgedeckte Fläche gesetzlichen Vorgaben eines Landes, in dem das Kraftfahrzeug zugelassen ist, entsprechen. Beispielsweise kann hierzu die aus der Beleuchtungsvorrichtung austretende Lichtstärke mindestens einen vorgegebenen Lichtstärke-Grenzwert übersteigen, bzw. die von der Abreißfolie abgedeckte Fläche mindestens eine vorgegebenen Flächen-Grenzwert übersteigen. Bei den gesetzlichen Vorgaben kann es sich beispielsweise um die Straßenverkehrs-Zulassungs-Ordnung in Deutschland handeln.

Um auf vorteilhafte Weise ein möglichst gutes Anliegen der Abreißfolie an der Lichtscheibe zu gewährleisten, kann nach einem weiteren Aspekt der Erfindung eine Außenumfangsform der Abreißfolie im Wesentlichen einer Außenumfangsform der Lichtscheibe entsprechen. Vorzugsweise ist dabei die Außenumfangsform der Abreißfolie an die Außenumfangsform der Lichtscheibe angepasst. In diesem Zusammenhang kann die Außenumfangsform auch eine Kontur und/oder eine Umrisslinie bezeichnen. Vorzugsweise ragt somit im befestigten Zustand weder die Abreißfolie über den Rand der Lichtscheibe, noch die Lichtscheibe über den Rand der Abreißfolie hinaus. Zudem oder alternativ kann die Abreißfolie auch im Wesentlichen formentsprechend zur Lichtscheibe ausgebildet sein. Mit anderen Worten kann der Abreißfolie eine Form, Größe und/oder Fläche aufweisen, die im Wesentlichen deckungsgleich zu der der Lichtscheibe ist. Auch dieses Merkmal stellt dabei auf vorteilhafte Weise sicher, dass die Lichtscheibe möglichst komplett von Eis befreit werden kann.

Gemäß einem weiteren Aspekt der Erfindung kann die Abreißfolie aus einem wasserabweisenden Material, beispielsweise einem hydrophoben Kunststoff, gefertigt sein. Alternativ kann die Abreißfolie allerdings auch nur eine wasserabweisende, Oberfläche umfassen, beispielsweise in Form einer mikro- und/oder nanoskopisch strukturierten Oberfläche, die die Haftung von Wasser auf der Abreißfolie möglichst minimiert. Dadurch kann auf vorteilhafte Weise erreicht werden, dass sich grundsätzlich möglichst wenig Eis, Reif und/oder Schnee auf der Beleuchtungsvorrichtung bildet bzw. ansammelt.

Zudem oder alternativ kann die Abreißfolie auch eine, vorzugsweise lichtdurchlässige, Klebeschicht zum lösbaren Befestigen der Abreißfolie auf der Lichtscheibe umfassen. Beispielsweise kann die Abreißfolie hierfür auf ihrer der Lichtscheibe zugewandten Seite eine, vorzugsweise lichtdurchlässige, Haftkleberschicht umfassen, deren Klebkraft so abgestimmt ist, dass sich die, auf der Lichtscheibe befestige, Abreißfolie gut und vorzugsweise rückstandsfrei von der Außenseite der Lichtscheibe lösen lässt. Falls die Abreißfolie eine Mehrzahl, vorzugsweise stapelförmig aufeinanderliegende, Folienlagen umfasst, können ferner auch die einzelnen Folienlagen jeweils auf einer der Lichtscheibe zugewandten Seite eine Haftkleberschicht umfassen, deren Klebkraft so abgestimmt ist, dass sich die einzelnen Folienlagen gut voneinander ablösen lassen. Auf vorteilhafte Weise wird dadurch eine kostengünstige Befestigung der Abreißfolie an der Beleuchtungsvorrichtung ermöglicht.

Ferner wird erfindungsgemäß auch ein Kraftfahrzeug, vorzugsweise ein Nutzfahrzeug, bereitgestellt, das eine Beleuchtungsvorrichtung, wie in diesem Dokument beschrieben, umfasst.

Des Weiteren wird erfindungsgemäß ein Verfahren zum Entfernen von Vereisungen von einer Beleuchtungsvorrichtung, vorzugsweise von einem LED-Scheinwerfer, eines Kraftfahrzeugs bereitgestellt. Dabei umfasst das Verfahren zunächst das Bereitstellen einer Beleuchtungsvorrichtung, wie in diesem Dokument beschrieben. Die auf der Lichtscheibe der Beleuchtungsvorrichtung lösbar befestigte Abreißfolie umfasst eine Mehrzahl stapelförmig aufeinanderliegender Folienlagen. Ferner umfasst das Verfahren den Schritt des Feststellens einer Vereisung an der Außenseite der Lichtscheibe, vorzugsweise einer Vereisung an der Außenseite der Abreißfolie.

Das Verfahren umfasst den Schritt des Ablösens mindestens der äußersten Folienlage der Abreißfolie. Dabei kann als die äußerste Folienlage diejenige Folienlage der Mehrzahl an Folienlagen verstanden werden, welche den größten Abstand zur Lichtscheibe besitzt. Im Gegensatz zu den im Stand der Technik bekannten Verfahren zur Enteisung von Beleuchtungseinrichtungen am Kraftfahrzeug, beispielsweise dem mechanischen oder chemischen Entfernen von Vereisungen mittels Eiskratzer oder Enteisungsmitteln, ermöglicht die erfindungsgemäße Lösung auf vorteilhafte Weise eine kostengünstige Methode, mit der Schäden an der Beleuchtungseinrichtung beim Entfernen der Vereisung möglichst vermieden werden können.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben Es zeigen:
- Figur 1:: Eine Beleuchtungsvorrichtung eines Kraftfahrzeugs gemäß einer Ausführungsform der Erfindung;
- Figur 2:: Eine Beleuchtungsvorrichtung eines Kraftfahrzeugs gemäß einer weiteren Ausführungsform der Erfindung;
- Figur 3:: Ein Kraftfahrzeug mit einer Beleuchtungseinrichtung gemäß einer Ausführungsform der Erfindung; und
- Figur 4:: Ein Flussdiagramm eines Verfahrens zum Entfernen von Vereisungen von einer Beleuchtungsvorrichtung gemäß einer Ausführungsform der Erfindung.

Gleiche oder funktional äquivalente Elemente sind dabei in allen Figuren mit denselben Bezugszeichen beschrieben und zum Teil nicht gesondert beschrieben.

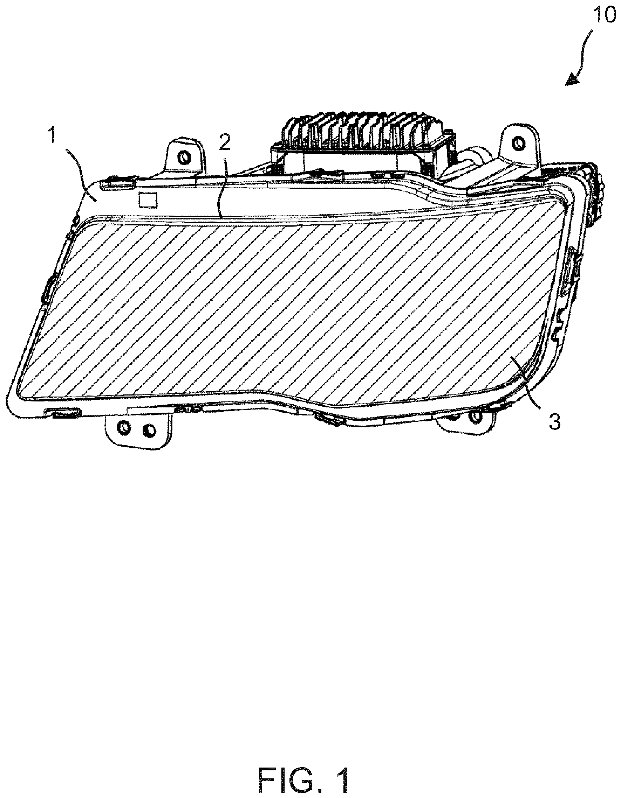

Figur 1 zeigt eine Beleuchtungsvorrichtung 10 eines Kraftfahrzeugs 20 - vorliegend einen Frontscheinwerfer - umfassend ein eine (nicht dargestellte) Lichtquelle umgebendes Gehäuse 1 mit einer für den Lichtaustritt vorgesehenen Lichtscheibe 2. Ferner ist an der Lichtquelle abgewandten Außenseite der Lichtscheibe 2 eine (schraffiert dargestellte) lichtdurchlässige Abreißfolie 3 lösbar befestigt. Der Ausdruck "*lichtdurchlässig*" kann hierbei so verstanden werden, dass die Abreißfolie 3 in einem für den Menschen sichtbaren Spektralbereich elektromagnetischer Strahlung weitestgehend transparent ist.

Ferner ist der Figur 1 zu entnehmen, dass die Form der lichtdurchlässigen Abreißfolie 3 dabei an die Form der Lichtscheibe 2 der Beleuchtungsvorrichtung 10 angepasst ist. Im Speziellen entspricht die Außenumfangsform der Abreißfolie 3 im Wesentlichen der Außenumfangsform der Lichtscheibe 2. Dadurch wird auf vorteilhafte Weise sichergestellt, dass beim Ablösen der Abreißfolie 3 ein möglichst großer Bereich der Lichtscheibe 2 von möglicherweise vorhandenen Vereisungen, Reif und/oder Schnee befreit wird.

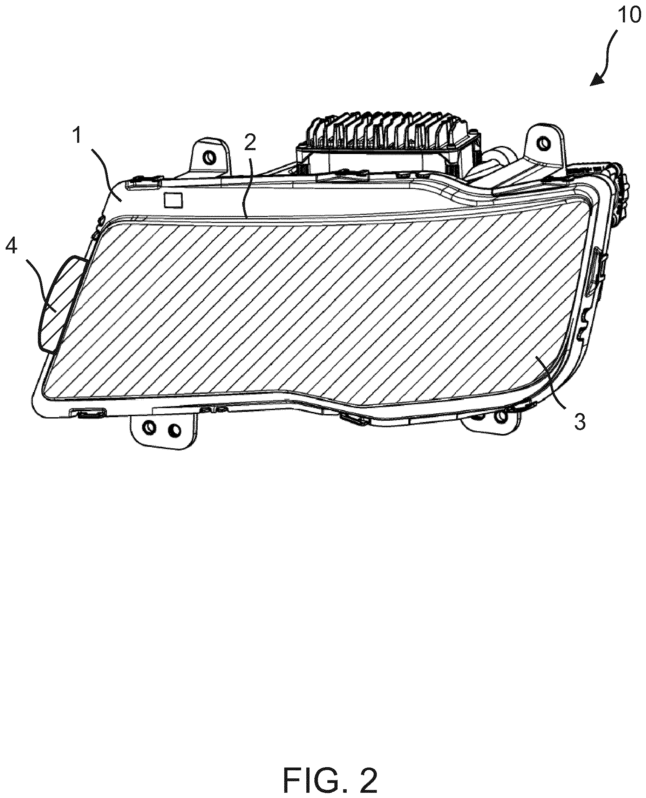

Figur 2 zeigt eine Beleuchtungsvorrichtung 10 eines Kraftfahrzeugs 20 gemäß einer weiteren Ausführungsform der Erfindung. Im Gegensatz zu der in Figur 1 gezeigten Ausführungsform umfasst die Abreißfolie 3 zusätzlich eine, vorzugsweise lichtdurchlässige, Grifflasche 4, die integral mit der Abreißfolie 3 angeformt ist. D. h., im vorliegenden Fall werden die Grifflasche 4 und die Abreißfolie 3 aus einem zusammenhängenden Folienstück gebildet. Um dabei die Griffigkeit der Grifflasche 4 zu erhöhen, kann die Grifflasche 4 ferner auch eine Fingereingriffsöffnung und/oder ein Noppen bildendes Pünktchenraster aufweisen (nicht dargestellt).

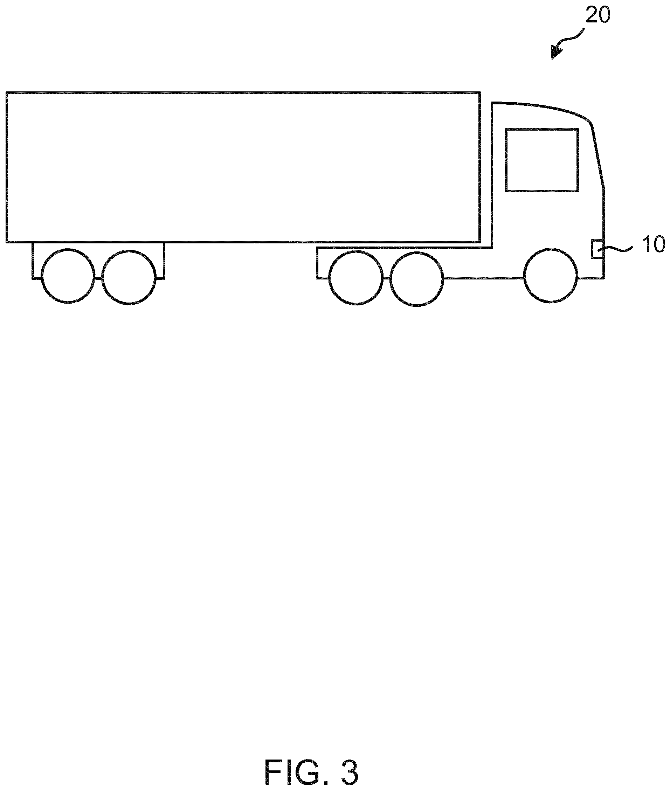

Figur 3 zeigt ein Kraftfahrzeug 20 mit einer Beleuchtungseinrichtung 10 gemäß einer Ausführungsform der Erfindung. Vorzugsweise handelt es sich bei dem Kraftfahrzeug 20 dabei um ein Nutzfahrzeug, beispielsweise einen Lastkraftwagen oder ein Omnibus. Bei der vorliegenden Ausführungsform umfasst das Kraftfahrzeug 20 einen Frontscheinwerfer, der ein eine Lichtquelle umgebendes Gehäuse 1 mit einer für den Lichtaustritt vorgesehene Lichtscheibe 2 umfasst, wobei auf einer der Lichtquelle abgewandten Außenseite der Lichtscheibe 2 eine lichtdurchlässige Abreißfolie 3 lösbar befestigt ist. Durch Abziehen bzw. Ablösen der Abreißfolie 3 von der Lichtscheibe 2, vorzugsweise kurz vor Fahrtbeginn, können somit auf vorteilhafte Weise Schnee, Reif und/oder Vereisungen, welche sich möglichweise an der Beleuchtungseinrichtung 10 - genauer gesagt an der Außenseite der Abreißfolie 3 - angelagert haben schnell entfernt werden.

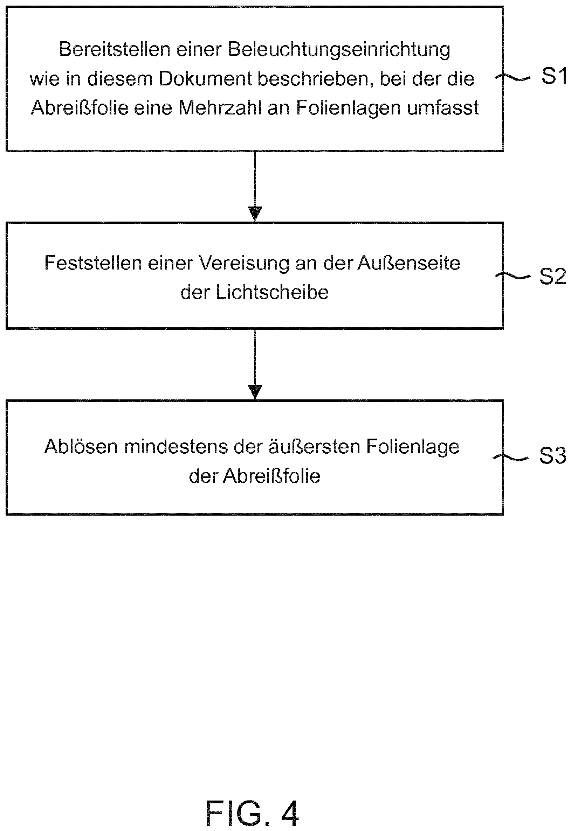

Figur 4 zeigt ein Flussdiagramm eines Verfahrens zum Entfernen von Vereisungen von einer Beleuchtungsvorrichtung 10 gemäß einer Ausführungsform der Erfindung. Das Verfahren umfasst dabei den Schritt S1, in dem eine Beleuchtungseinrichtung 10, wie in diesem Dokument beschrieben und beispielsweise in Figur 1 dargestellt, bereitgestellt wird. Erfindungsgemäß umfasst die Abreißfolie eine Mehrzahl stapelförmig aufeinanderliegender Folienlagen.

Im Schritt S2 wird nun eine Vereisung an der Außenseite der Lichtscheibe 2, vorzugsweise an der Außenseite der Abreißfolie 3, festgestellt. Das Feststellen kann dabei besonders bevorzugt durch in Augenscheinnahme der Beleuchtungseinrichtung 10 durch den Fahrer erfolgen. Zudem oder alternativ kann das Feststellen der Vereisung allerdings auch mittels geeigneter Sensoren, beispielsweise mittels eines optischen Sensors, der die Lichtdurchlässigkeit der Lichtscheiben-Abreißfolien-Anordnung misst, erfolgen.

Wurde im Schritt S2 eine Vereisung feststellt, so kann im Schritt S3 mindestens die äußerste Folienlage der Mehrzahl an Folienlagen der Abreißfolie 3 abgelöst werden, falls die Abreißfolie 3 eine Mehrzahl an, vorzugsweise stapelförmig aufeinanderliegende, Folienlagen umfasst. Es können allerdings auch mehrere Folienlagen, beispielsweise die obersten drei Folienlagen abgelöst werden. Falls die Abreißfolie 3 einlagig ausgebildet ist, kann im Schritt S3 nur die eine Folienlage der Abreißfolie 3 abgelöst werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können ohne den Bereich der beigefügten Patentansprüche zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Gehäuse
- 2: Lichtscheibe
- 3: Abreißfolie
- 4: Grifflasche
- 10: Beleuchtungsvorrichtung
- 20: Kraftfahrzeug

## Patentansprüche

1. Beleuchtungsvorrichtung (10), vorzugsweise LED-Scheinwerfer, für ein Kraftfahrzeug (20), umfassend ein eine Lichtquelle umgebendes Gehäuse (1) mit einer für den Lichtaustritt vorgesehene Lichtscheibe (2), wobei auf einer der Lichtquelle abgewandten Außenseite der Lichtscheibe (2) eine lichtdurchlässige Abreißfolie (3) lösbar befestigt ist, **dadurch gekennzeichnet, dass** die Abreißfolie (3) eine Mehrzahl stapelförmig aufeinanderliegender Folienlagen umfasst, derart, dass die Abreißfolie (3) als Folienstapel aus einzeln ablösbaren Folienlagen ausgebildet ist.

2. Beleuchtungsvorrichtung (10) nach Anspruch 1, **dadurch gekennzeichnet, dass** jede der Folienlagen eine Grifflasche (4) zum Ablösen der jeweiligen Folienlage der Abreißfolie (3) umfasst.

3. Beleuchtungsvorrichtung (10) nach einem der vorherigen Ansprüche, **dadurch gekennzeichnet, dass** die Lichtquelle Leuchtdioden als Leuchtmittel umfasst.

4. Beleuchtungsvorrichtung (10) nach einem der vorherigen Ansprüche, **dadurch gekennzeichnet, dass** eine zur Lichtscheibe (2) gerichtete Seite der Abreißfolie (3) vollflächig an der Außenseite der Lichtscheibe (2) anliegt und vorzugsweise mindestens 75 %, besonders bevorzugt 95%, der Außenseite der Lichtscheibe (2) bedeckt.

5. Beleuchtungsvorrichtung nach einem der vorherigen Ansprüche, **dadurch gekennzeichnet, dass** eine aus der Beleuchtungsvorrichtung austretende Lichtstärke und/oder eine von der Abreißfolie abgedeckte Fläche gesetzlichen Vorgaben eines Landes, in dem das Kraftfahrzeug zugelassen ist, entspricht.

6. Beleuchtungsvorrichtung (10) nach einem der vorherigen Ansprüche, **dadurch gekennzeichnet, dass**
a) eine Außenumfangsform der Abreißfolie (3) im Wesentlichen einer Außenumfangsform der Lichtscheibe (2) entspricht und/oder
b) die Abreißfolie (3) im Wesentlichen formentsprechend zur Lichtscheibe (2) ausgebildet ist.

7. Beleuchtungsvorrichtung (10) nach einem der vorherigen Ansprüche, **dadurch gekennzeichnet, dass** die Abreißfolie (3)
a) aus einem wasserabweisenden Material gefertigt ist und/oder
b) eine Klebeschicht zum lösbaren Befestigen der Abreißfolie (3) auf der Lichtscheibe (2) umfasst.

8. Kraftfahrzeug (20), vorzugsweise Nutzfahrzeug, umfassend eine Beleuchtungsvorrichtung (10) nach einem der vorherigen Ansprüche.

9. Verfahren zum Entfernen von Vereisungen von einer Beleuchtungsvorrichtung (10), vorzugsweise von einem LED-Scheinwerfer, eines Kraftfahrzeugs (20), umfassend die Schritte:
a) Bereitstellen einer Beleuchtungsvorrichtung (10) nach einem der Ansprüche 1 bis 10,
b) Feststellen einer Vereisung an der Außenseite der Lichtscheibe (2),
c) Ablösen mindestens der äußersten Folienlage der Abreißfolie (3).

## Claims

1. An illumination apparatus (10), preferably an LED headlight, for a motor vehicle (20), comprising a housing (1) surrounding a light source and having a lens (2) provided for the light exit, wherein a light-transmissive tear-off film (3) is detachably attached to an outer side of the lens (2) facing away from the light source, **characterized in that** the tear-off film (3) comprises a plurality of film layers, which are arranged one on top of the other in the manner of a stack, such that the tear-off film (3) is formed as a film stack of individually detachable film layers.

2. The illumination apparatus (10) according to Claim 1, **characterized in that** each of the film layers comprises a grip lug (4) for detaching the respective film layer of the tear-off film (3).

3. The illumination apparatus (10) according to either of the preceding claims, **characterized in that** the light source comprises light-emitting diodes as light-emitting means.

4. The illumination apparatus (10) according to one of the preceding claims, **characterized in that** a side of the tear-off film (3) directed towards the lens (2) lies against the full area of the other side of the lens (2) and preferably covers at least 75%, with particular preference 95%, of the outer side of the lens (2).

5. The illumination apparatus according to one of the preceding claims, **characterized in that** a luminous intensity emerging from the illumination apparatus and/or a surface that is covered by the tear-off film corresponds to the statutory requirements of a country in which the motor vehicle is registered.

6. The illumination apparatus (10) according to one of the preceding claims, **characterized in that**
a) an outer perimeter shape of the tear-off film (3) substantially corresponds to an outer perimeter shape of the lens (2) and/or
b) the tear-off film (3) is formed so as to substantially correspond to the shape of the lens (2).

7. The illumination apparatus (10) according to one of the preceding claims, **characterized in that** the tear-off film (3)
a) has been produced from a water-repellent material and/or
b) comprises an adhesive layer for detachably attaching the tear-off film (3) to the lens (2).

8. A motor vehicle (20), preferably a commercial vehicle, comprising an illumination apparatus (10) according to one of the preceding claims.

9. A method for removing icing from an illumination apparatus (10), preferably from an LED headlight, of a motor vehicle (20), comprising the steps of:
a) providing an illumination apparatus (10) according to one of Claims 1 to 10,
b) determining icing on the outer side of the lens (2),
c) detaching at least the outermost film layer of the tear-off film (3).

## Revendications

1. Dispositif d'éclairage (10), de préférence phare à LED, pour un véhicule automobile (20), comprenant un boîtier (1) entourant une source de lumière et doté d'une glace de diffusion (2) prévue pour la sortie de lumière, un film à arracher (3) transparent étant fixé de manière amovible sur une face extérieure de la glace de diffusion (2), détournée de la source de lumière, **caractérisé en ce que** le film à arracher (3) comprend une pluralité de couches de film superposées en forme d'empilement de telle sorte que le film à arracher (3) est réalisé sous la forme d'un empilement de films composé de couches de film à arracher individuellement.

2. Dispositif d'éclairage (10) selon la revendication 1, **caractérisé en ce que** chacune des couches de film comprend une languette de préhension (4) pour détacher la couche de film respective du film à arracher (3).

3. Dispositif d'éclairage (10) selon l'une quelconque des revendications précédentes, **caractérisé en ce que** la source de lumière comprend des diodes électroluminescentes comme moyens lumineux.

4. Dispositif d'éclairage (10) selon l'une quelconque des revendications précédentes, **caractérisé en ce qu'**une face du film à arracher (3), dirigée vers la glace de diffusion (2), s'applique sur toute la surface contre la face extérieure de la glace de diffusion (2) et couvre de préférence au moins 75 %, de manière particulièrement préférée 95 %, de la face extérieure de la glace de diffusion (2).

5. Dispositif d'éclairage selon l'une quelconque des revendications précédentes, **caractérisé en ce qu'**une intensité de lumière émanant du dispositif d'éclairage et/ou une surface couverte par le film à arracher correspond(ent) aux dispositions légales d'un pays dans lequel le véhicule automobile est immatriculé.

6. Dispositif d'éclairage (10) selon l'une quelconque des revendications précédentes, **caractérisé en ce que**
a) une forme de circonférence extérieure du film à arracher (3) correspond substantiellement à une forme de circonférence extérieure de la glace de diffusion (2), et/ou
b) le film à arracher (3) est réalisé substantiellement en coïncidence de forme avec la glace de diffusion (2).

7. Dispositif d'éclairage (10) selon l'une quelconque des revendications précédentes, **caractérisé en ce que** le film à arracher (3)
a) est fabriqué à partir d'un matériau hydrophobe, et/ou
b) comprend une couche adhésive pour la fixation amovible du film à arracher (3) sur la glace de diffusion (2).

8. Véhicule automobile (20), de préférence véhicule utilitaire, comprenant un dispositif d'éclairage (10) selon l'une quelconque des revendications précédentes.

9. Procédé permettant d'éliminer le givrage d'un dispositif d'éclairage (10), de préférence d'un phare à LED, d'un véhicule automobile (20), comprenant les étapes consistant à :
a) fournir un dispositif d'éclairage (10) selon l'une quelconque des revendications 1 à 10,
b) constater un givrage sur la face extérieure de la glace de diffusion (2),
c) détacher au moins la couche de film la plus à l'extérieur du film à arracher (3).
